# EUROPEAN PATENT SPECIFICATION

(11) **EP 0 919 762 B1**
(45) Date of publication and mention of the grant of the patent: **16.04.2003**
(21) Application number: 98308234.8
(22) Date of filing: 09.10.1998
(51) Int. Cl.: F16L 55/165

(54) **A method of lining a host pipe or conduit and a liner**
Verfahren zum Auskleiden eines Rohres oder einer Leitung und eine Auskleidung
Procédé pour revêtir l'intérieur d'un tuyau ou d'un conduit et une couverture

(30) Priority: 26.11.1997 GB 9724939
(43) Date of publication of application: 02.06.1999
(73) Proprietor: Evolved Processes Limited, Marlborough, Wiltshire SN8 1HQ (GB)
(72) Inventor: Lippiatt, Raymond, Wiltshire, SN8 2RG (GB)
(74) Representative: Hutchins, Michael Richard

(56) References cited:
- WO-A-90/09541
- WO-A-95/20125
- DE-A- 3 513 956
- GB-A- 2 302 384
- US-A- 4 077 610
- US-A- 5 388 616

## Description

This invention relates to a method of lining a host pipe or conduit by an eversion method.

Eversion methods of lining pipelines or conduits are well known and examples of such methods can be found in, for example, EP-A-0611914, GB-A-1025011, GB-A-2082285, GB-A-1559323, EP-A-0304914, GB-A-2042673, DE-A-2718877, EP-A-062100, EP-A-0620102, JP 60-7124, JP 64-182709 and JP 64-182710.

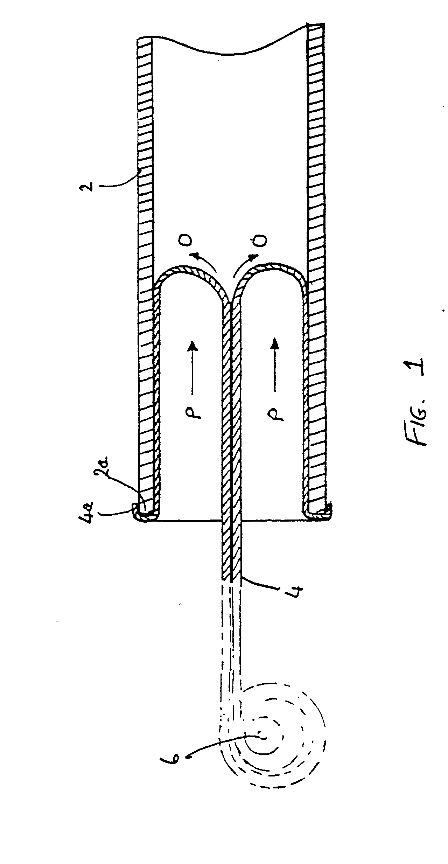

Exemplary of conventional methods of eversion lining of pipes is the method disclosed in EP-A-0 301 895 (Angus Fire Armour Limited). This method is described in more detail below with reference to Figure 1 of the drawings appended hereto.

One of the problems with the method of EP-A-0 301 895, and many other conventional methods of eversion lining, is that rather complex arrangements are usually required for applying fluid pressure or vacuum to the liner to force or draw the liner through the host pipe. Although generally workable, the need to use pressurised gases or water in a field situation can be inconvenient, and in certain circumstances may not be possible at all.

It is an object of the present invention to provide a simplified method of eversion lining in which the liner can be introduced into the host pipe or conduit using standard winching equipment, and without the need for the aforementioned pressurising apparatus.

Accordingly, in a first aspect, the invention provides a method of lining a host pipe or conduit by eversion of a liner within the host pipe or conduit; wherein the liner is of a flattened or axially folded configuration; characterised in that the liner is carried on and surrounds a tubular support, the tubular support being releasably bonded to the liner by a peelable adhesive at one or more circumferential locations on the inner surface of the liner and not being bonded to the liner either side of each said location, the liner being arranged to peel away from the tubular support and evert towards or into contact with the wall of the host pipe or conduit as the tubular support is towed through the host pipe or conduit.

It is most preferred that the tubular support is moved through the host pipe or conduit solely by mechanical means, most preferably solely by towing, and without the use of fluid pressure from behind the everting liner, and without the application of vacuum in front of the everting liner.

The liner can be selected such that after eversion, it is in tight contact with the wall of the host pipe or conduit, or it can be undersized with respect to the host pipe such that there is initially an annular gap between the host pipe wall and the liner. The undersized liner can then be caused or allowed to expand to tightness against the pipe wall. The expansion of the liner can be achieved by means of any of a number of well known processes, which can involve for example simple stretching and plastic deformation of the liner, or by building expansive stresses into the liner and releasing the expansive stresses through heat treatment of the liner after installation.

According to the invention, the liner is adhered to the tubular support prior to eversion by means of a peelable adhesive. The advantage of using a peelable adhesive is that after the liner has everted, adhesive initially on the bore of the liner is presented on the outer surface of the liner and therefore serves at least partially to bond the liner to the wall of the host pipe when the liner is brought into contact with the wall. Alternatively, adhesive on the tubular support may be transferred to parts of the liner bore ultimately to help bond the liner to the host bore in like manner.

The peelable adhesive is typically chosen such that the aforementioned bond to the wall of the host pipe is sufficiently strong to hold the liner against any residual contractive stresses. Such contractive stresses can arise after expansion of an initially undersized liner to tightness within the host pipe as part of the installation process, or after first recommissioning of the pipeline.

in one embodiment, the invention provides a method of lining a host pipe or conduit by eversion of a liner within the host pipe or conduit as hereinbefore defined; wherein the liner is of a generally flattened or folded configuration and is carried on a tubular support, the liner being arranged to peel away from the tubular support and evert towards or into contact with the wall of the host pipe or conduit as the tubular support is towed through the host pipe or conduit, and wherein an adhesive-dispensing head is towed along the host pipe or conduit in front of the liner, the adhesive-dispensing head being arranged to apply adhesive to the front of the everting liner and/or to the host pipe wall, prior to the liner contacting the said wall.

In this embodiment, the adhesive applied by the adhesive-dispensing head is additional to the peelable adhesive with which the tubular support has been releasably bonded to the liner.

The tubular support typically is initially disposed within the liner so as to give an initial loose fit with an annular gap therebetween. The tubular support and liner can be formed separately and the support pulled through the bore of the liner. More usually however, the liner is extruded around the tubular support. This can be accomplished, for example, by extruding the tubular support at a first extrusion location and then extruding the liner around the tubular support at a second extrusion location downstream of the first. Adhesive can be applied to the inner surface of the liner and/or the outer surface of the tubular support between the first and second extrusion locations, or at one or both locations.

Once the tubular support has been arranged within the liner, whether by pulling the support through the liner, or by extrusion of the liner about the support, or by any other means, the liner and tubular support are usually subjected to compression so as generally to flatten them, the flattening process serving to bond the liner to the tubular support.

The ratio of the initial diameter (i.e. prior to compression) of the liner to the initial diameter of the tubular support is typically in the range from 2:1 to 5:1, more usually in the range 3:1 to 4:1. Following the compression step, the width of the flattened liner/tubular support combination typically is greater than the diameter of the host pipe into which the liner is to be installed (although it need not be), although the depth of the combination is significantly less than the diameter of the host pipe.

The tubular support can be towed through the host pipe or conduit by means of a cable attached to a suitable mounting point at the leading end of the support. An adhesive-dispensing head, e.g. a dispensing lance, can be mounted so as to be movable along the host pipe in front (and preferably immediately in front) of the everting liner. For example, the lance can be mounted on a second cable, the dispensing head being connected to a supply line containing adhesive. The supply line can extend through the bore of the tubular support but more usually extends into the host pipe from the remote end thereof, i.e. the end at which the towing cable is connected to a winch or other towing means.

The tubular support is usually formed from a plastics material such as a polyolefin e.g. polyethylene (high strength HDPE) or polypropylene.

The liner is typically formed from a polymer such as a polyolefin homopolymer or a copolymer or mixture thereof. The liner can be unilaminar or have more than one layer. For example, the liner can have a main structural layer and a barrier layer formed from a polymer such as a polyamide. A reinforcing layer can also be present, for example a reinforcing layer containing a fibrous reinforcing material such as carbon fibres.

The method of the present invention can be used for example to introduce into the bore of a host pipe or conduit liners having a wall thickness in the range from 0.1mm to 15mm, e.g. 0.5mm to 5mm.

In another aspect, the invention provides a method of forming a supported liner suitable for use in the method as hereinbefore defined, the method comprising applying a peelable adhesive to the outer surface of a tubular support (e.g. by coating) and/or applying a peelable adhesive to the inner surface of the liner (e.g by coating), positioning the tubular support within the bore of a liner, and compressing the liner and tubular support so that the liner is urged into contact with the tubular support and is peelably bonded thereto over part, but not all, of its circumference.

In one preferred embodiment, the method comprises extruding the tubular support at a first extrusion location; extruding the liner about the tubular support at a second extrusion location downstream of the first, such that the tubular support is initially loosely disposed within the liner; applying (e.g. by coating) a peelable adhesive to the outer surface of the tubular support and/or the inner surface of the liner; and then compressing the liner and tubular support to form a generally flattened composite assembly in which the liner is peelably bonded to the tubular support over part, but not all, of its circumference.

In the aforementioned method of forming the supported liner, the peelable adhesive can be, for example, applied as a coating to the outer surface of the tubular support; or it can be applied as a coating to the inner surface of the liner. In a further alternative, the peelable adhesive can be applied in the form of one or more adhesive tapes, for example extending generally axially along the outer surface of the tubular support. The adhesive tape(s) can be double sided, the two sides of the tape having adhesives thereon of different peel strength, one side having a relatively high peel strength adhesive being bonded to the liner and the other side having a relatively low peel strength adhesive being bonded to the tubular support.

In a still further aspect, the invention provides a liner supported on a tubular support as hereinbefore defined.

The invention will now be illustrated, but not limited, by reference to the specific embodiments shown in the accompanying drawings of which:
Figure 1 is a sectional elevation illustrating a known method of eversion lining of a host pipe;
Figure 2 is a schematic side sectional elevation illustrating one embodiment of the invention;

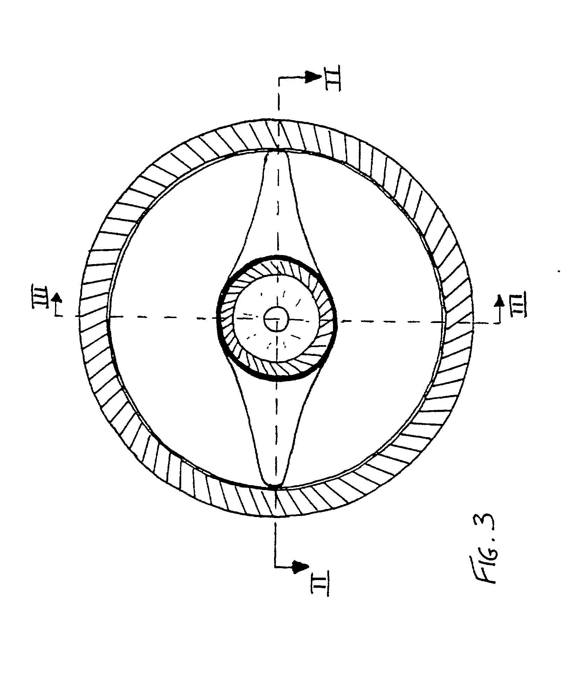

Figure 3 is a sectional elevation along line I-I in Figure 2;
Figure 4 is a sectional elevation along line III-III in Figure 3;
Figure 5 is a sectional elevation through a liner having a tubular support loosely disposed therein prior to bonding together;
Figure 6 is a schematic sectional elevation illustrating a tubular support and liner pipe after compression to bond the two together; and
Figure 7 is a schematic sectional elevation showing the support and liner pipe of Figure 6 after removal of the compressive force.

Referring now to the drawings, Figure 1 illustrates a known method of eversion lining of a pipe or conduit as described in European Patent Application EP-A-0 301 895. In the method of EP-A-0 301 895, a host pipe 2 is lined with a flexible liner 4 which is fed into the bore of the host pipe from a reel 6. One end 4a of the liner is secured about the mouth 2a of the host pipe , and the liner is then forced into the host pipe by the pressure of a compressed fluid (indicated schematically by the letter P) such as compressed air or water. As the liner 4 is forced along the host pipe, so it gradually everts or turns inside out as shown by the arrows O in the drawing. As an alternative to using fluid pressure to evert the liner, the liner can instead be drawn through the host pipe by the application of vacuum to the leading surface of the liner.

A major disadvantage of the arrangement shown in Figure 1 is that it requires the use of a source of fluid pressure or vacuum, which in turn requires the components of the lining system to be fitted together in a fluid tight condition. A further disadvantage is that for relatively small bore pipes, very large pressures tend to be required in order to bring about eversion. The present invention provides a means of avoiding the use of fluid pressure, the liner being capable of being everted simply by towing it through the host pipe using a suitable winch or other towing device.

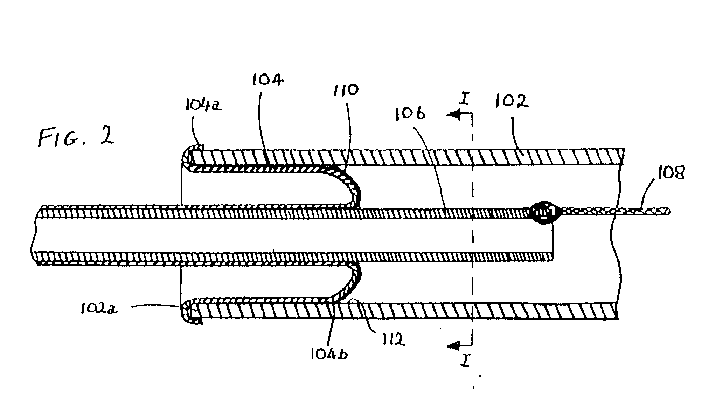

As shown in Figure 2, according to the invention, a host pipe 102 is lined with a liner 104 which can be formed from, for example, a polyolefin mixture of 2mm thickness. The liner 104 is carried on a tubular support 106, which can be formed from a high density polyethylene (HDPE). To the leading end of the tubular support 106 is attached an end of a towing cable 108, the other end of which is attached to a winch at the remote end of the host pipe.

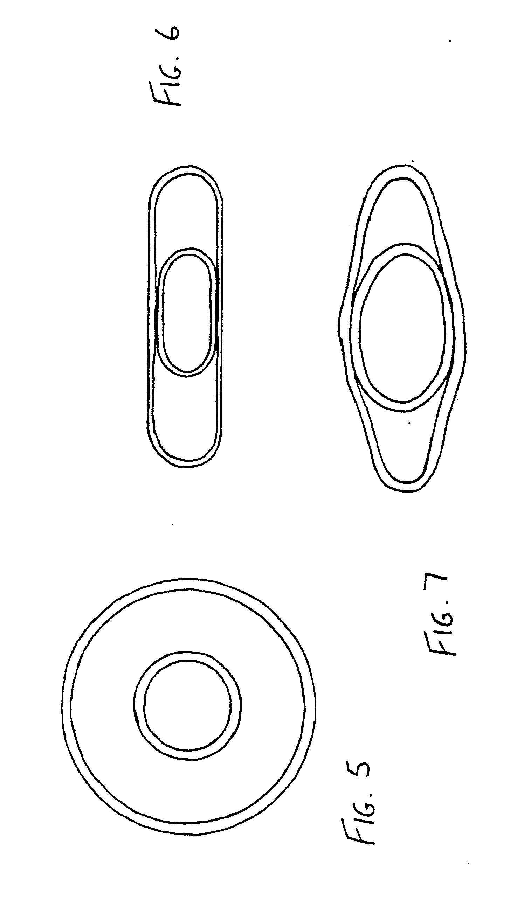

The tubular support and liner, are initially both formed in a circular cross section, the tubular support being extruded through a suitable die of a conventional extruder at a first extrusion location and the liner being extruded around the tubular support at a second extrusion location downstream of the first. Between the first and second extrusion locations, or at one of the locations, a layer 110 of a tacky peelable adhesive is coated onto the outer surface of the tubular support and/or the inner surface of the liner. As shown in Figure 5, immediately after extrusion of the liner around the tubular support, the tubular support is loosely arranged within the liner.

Before it can be used in the eversion process, the tubular support/liner combination shown in Figure 5 is compressed, for example between rollers, to give a profile as shown in Figure 6. During this compression step, the liner is bonded to the tubular support by the peelable adhesive. Once the compressive force is released, the resilience of the material causes it to resile to a limited extent towards a more circular "eye" shape as shown in Figure 7, before the combination is wound on to a drum as shown in Figure 8.

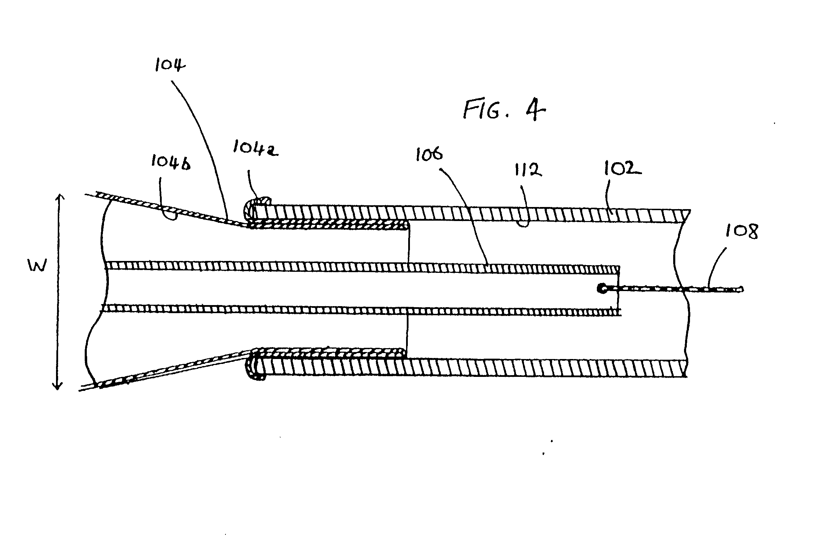

In use, as shown in Figure 2, an end 104a of the liner 104 is stretched over the mouth 102a of the host pipe by means of a suitable expanding tool optionally provided with thermal softening capability, and the cable 108 is used to draw the tubular support and liner into the bore of the host pipe 102. As can be seen from Figures 2 and 4, before insertion into the host pipe the flattened form of the liner/support combination means that the width W of the liner is typically greater than the diameter of the host pipe.

As the tubular support is towed along the bore, the liner 104 is progressively peeled away from the support and turned inside out (everted) such that the surface 104b formerly facing radially inwardly, now faces radially outwardly and is in contact with or near to the wall 112 of the host pipe. As will be apparent from the drawings, part of the surface of the liner will have been in contact with the tubular support and will therefore have picked up a layer of peelable adhesive from the support. Alternatively, substantially all of the surface of the liner can be provided with a coating of peelable adhesive, the adhesive having been applied to the inner surface of the liner during the extrusion step. Following eversion, the peelable adhesive on the liner helps to secure the liner in place against the host pipe and prevent inadvertent axial displacement along the host pipe.

A major advantage of the method of the invention is that it avoids the need for the complex equipment and fluid-tight conditions typically required for everting liners using fluid pressure or vacuum. Instead, the liner can be introduced into the host pipe simply by towing the tubular support through the host pipe with a conventional winch.

## Claims

1. A method of lining a host pipe or conduit (102) by eversion of a liner (104) within the host pipe or conduit (102); wherein the liner (104) is of a flattened or axially folded configuration; **characterised in that** the liner (104) is carried on and surrounds a tubular support (106), the tubular support (106) being releasably bonded to the liner (104) by a peelable adhesive (110) at one or more circumferential locations on the inner surface of the liner (104) and not being bonded to the liner (104) either side of each said location, the liner (104) being arranged to peel away from the tubular support (106) and evert towards or into contact with the wall (112) of the host pipe or conduit (102) as the tubular support (106) is towed through the host pipe or conduit (102).

2. A method according to claim 1 wherein the tubular support (106) is moved through the host pipe or conduit (102) solely by towing and without the use of fluid pressure from behind the everting liner (104).

3. A method according to claim 1 or claim 2 wherein the tubular support (106) is releasably bonded to the liner (104) at at least two circumferentially spaced apart locations on the inner surface of the liner (104b).

4. A method according to any one of claims 1 to 3 wherein the liner (104) is of flattened circular cross section.

5. A method according to any one of the preceding claims wherein the tubular support (106) is of flattened circular cross section.

6. A method according to any one of the preceding claims wherein the tubular support (106) is towed through the host pipe or conduit (102) by means of a cable (108) secured to a leading end of the support (106).

7. A method according to any one of the preceding claims wherein the liner (104) has a wall thickness in the range from 0.1mm to 15mm, for example in the range 0.5mm to 5mm.

8. A method according to any one of the preceding claims wherein the ratio of the diameter of the liner (104) to the diameter of the tubular support (106), prior to any flattening of the liner (104) and tubular support (106), is in the range from 2:1 to 5:1, for example in the range 3:1 to 4:1.

9. A method according to any one of the preceding claims wherein the peelable adhesive (110) takes the form of:
(i) a coating of adhesive applied to the outer surface of the tubular support (106) and/or the inner surface (104b) of the liner (104) prior to eversion; or
(ii) one or more adhesive tapes extending generally axially along the outer surface of the tubular support (106), and optionally wherein for example the adhesive tape(s) is or are double sided, the two sides of the tape having adhesives thereon of different peel strength, one side having a relatively high peel strength adhesive being bonded to the liner (104) and the other side having a relatively low peel strength adhesive being bonded to the tubular support (106).

10. A method according to any one of the preceding claims wherein the liner (104) is formed from an extruded polymeric material.

11. A method according to claim 10 wherein the extruded polymeric material is a polyolefin.

12. A method of forming a supported liner (104) suitable for use in the method as defined in any one of the preceding claims, the method comprising coating a tubular support (106) on its outer surface and/or coating a liner (104) on its inner surface (104b) with a peelable adhesive (110), positioning the tubular support (106) within the bore of a liner (104), and compressing the liner (104) and tubular support (106) so that the liner (104) is urged into contact with the tubular support (106) and is peelably bonded thereto over part, but not all, of its circumference.

13. A method of forming a supported liner (104) suitable for use in the method as defined in any one of claims 1 to 11, the method comprising extruding the tubular support (106) at a first extrusion location; extruding the liner (104) about the tubular support (106) at a second extrusion location downstream of the first, such that the tubular support (106) is initially loosely disposed within the liner (104); applying, e.g. by coating, a peelable adhesive (110) to the outer surface of the tubular support (106) and/or the inner surface (104b) of the liner (104); and then compressing the liner (104) and tubular support (106) to form a generally flattened composite assembly in which the liner (104) is peelably bonded to the tubular support (106) over part, but not all, of its circumference.

14. A method according to claim 12 or claim 13 wherein:
(i) the peelable adhesive (110) is applied as a coating to the outer surface of the tubular support (106) and/or the peelable adhesive (110) is applied as a coating to the inner surface (104b) of the liner (104); or
(ii) the peelable adhesive (110) is applied in the form of one or more adhesive tapes, for example extending generally axially along the outer surface of the tubular support (106), and wherein optionally for example the adhesive tape(s) is or are double sided, the two sides of the tape having adhesives thereon of different peel strength, one side having a relatively high peel strength adhesive being bonded to the liner (104) and the other side having a relatively low peel strength adhesive being bonded to the tubular support (106).

15. A method of lining a host pipe or conduit (102) according to claim 1 wherein an adhesive-dispensing head is towed along the host pipe or conduit in front of the liner, the adhesive-dispensing head being arranged to apply adhesive to the front of the everting liner and/or to the host pipe wall, prior to the liner contacting the said wall.

16. A liner (104) suitable for use in a method as defined in any one of claims 1 to 11, the liner (104) being of a flattened or axially folded configuration and being **characterised in that** it is carried on and surrounds a tubular support (106), the tubular support (106) being releasably bonded to the liner (104) by a peelable adhesive (110) at one or more circumferential locations on the inner surface of the liner (104) and not being bonded to the liner (104) either side of each said location, the liner (104) in use being capable of peeling away from the tubular support (106) and everting towards or into contact with the wall (112) of a host pipe or conduit (102) as the tubular support (106) is towed through the host pipe or conduit (102).

## Patentansprüche

1. Verfahren zur Auskleidung eines Leitungsrohres oder eines Kanals (102) durch Umstülpen einer Auskleidung (104) innerhalb des Leitungsrohres oder des Kanals (102); wobei die Auskleidung (104) eine abgeflachte oder axial gefaltete Konfiguration aufweist,
**dadurch gekennzeichnet, daß** die Auskleidung (104) von einem schlauchförmigen Träger (106) getragen wird und diesen umschließt, wobei der schlauchförmige Träger (106) lösbar an der Auskleidung (104) mittels eines abschälbaren Klebers (110) an einer oder mehreren Umfangsstellen auf der inneren Oberfläche der Auskleidung (104) festgelegt ist und nicht festgelegt ist an der Auskleidung (104) auf beiden Seiten jeder dieser Stellen, wobei die Auskleidung (104) derart angeordnet ist, daß sie von dem schlauchförmigen Träger (106) abgezogen und nach der Wand (112) des Leitungsrohres oder des Kanals (102) oder in Berührung mit dieser Wand gebracht wird, wenn der schlauchförmige Träger (106) durch das Leitungsrohr oder den Kanal (102) gezogen wird.

2. Verfahren nach Anspruch 1, bei welchem der schlauchförmige Träger (106) durch das Leitungsrohr oder den Kanal (102) allein durch Ziehen und ohne Benutzung eines Fluiddruckes von der Rückseite der Auskleidung (104) bewegt wird.

3. Verfahren nach den Ansprüchen 1 oder 2, bei welchem der schlauchförmige Träger (106) lösbar an der Auskleidung (104) an wenigstens zwei in Umfangsrichtung im Abstand zueinander liegenden Stellen auf der inneren Oberfläche der Auskleidung (104b) festgelegt ist.

4. Verfahren nach einem der Ansprüche 1 bis 3, bei welchem die Auskleidung (104) einen abgeflachten Kreisquerschnitt aufweist.

5. Verfahren nach einem der vorhergehenden Ansprüche, bei welchem der schlauchförmige Träger (106) einen abgeflachten Kreisquerschnitt aufweist.

6. Verfahren nach einem der vorhergehenden Ansprüche, bei welchem der schlauchförmige Träger (106) mittels eines Kabels (108), das am Vorderende des schlauchförmigen Trägers (106) befestigt ist, durch das Leitungsrohr oder den Kanal (102) gezogen wird.

7. Verfahren nach einem der vorhergehenden Ansprüche, bei welchem die Auskleidung (104) eine Wandstärke im Bereich zwischen 0,1 mm und 15 mm, beispielsweise im Bereich zwischen 0,5 mm und 5 mm, aufweist.

8. Verfahren nach einem der vorhergehenden Ansprüche, bei welchem das Verhältnis von Durchmesser der Auskleidung (104) und Durchmesser des schlauchförmigen Trägers (106) vor einer Abflachung der Auskleidung (104) und des schlauchförmigen Trägers (106) im Bereich zwischen 2:1 und 5:1, beispielsweise im Bereich von 3:1 bis 4:1, liegt.

9. Verfahren nach einem der vorhergehenden Ansprüche, bei welchem der abschälbare Kleber (110) die folgende Gestalt hat:
(i) ein Überzug aus einem Kleber ist auf der äußeren Oberfläche des schlauchförmigen Trägers (106) und/oder der inneren Oberfläche (104b) der Auskleidung (104) vor dem Umstülpen aufgebracht, und
(ii) eines oder mehrere Klebebänder erstrecken sich allgemein axial längs der äußeren Oberfläche des schlauchförmigen Trägers (106), und fakultativ ist beispielsweise das Klebeband oder die Klebebänder sind doppelseitig beschichtet, und die beiden Seiten des Bandes besitzen unterschiedliche Abschälfestigkeiten des Klebers, wobei die eine Seite mit einer relativ hohen Abschälfestigkeit des Klebers mit der Auskleidung (104) und die andere Seite mit einer relativ niedrigen Abschälfestigkeit des Klebers auf den schlauchförmigen Träger (106) geklebt ist.

10. Verfahren nach einem der vorhergehenden Ansprüche, bei welchem die Auskleidung (104) aus extrudiertem, polymerischem Material besteht.

11. Verfahren nach Anspruch 10, bei welchem das extrudierte, polymere Material ein Polyolefin ist.

12. Verfahren zur Erzeugung einer abgestützten Auskleidung (104), die zur Benutzung in einem Verfahren gemäß einem der vorhergehenden Ansprüche geeignet ist, wobei das Verfahren die folgenden Schritte umfaßt: es wird ein schlauchförmiger Träger (106) auf seiner äußeren Oberfläche mit einem Überzug versehen und/oder es wird eine Auskleidung (104) an ihrer inneren Oberfläche (104b) mit einem abschälbaren Kleber (110) versehen; es wird der schlauchförmige Träger (106) innerhalb des Innendurchmessers einer Auskleidung (104) angeordnet, und es wird die Auskleidung (104) mit dem schlauchförmigen Träger (106) derart zusammengepreßt, daß die Auskleidung (104) in Berührung mit dem schlauchförmigen Träger (106) gebracht und abschälbar über einen Teil des Umfangs, aber nicht über den gesamten Umfang, verbunden ist.

13. Verfahren zur Erzeugung einer abgestützten Auskleidung (104), geeignet zur Benutzung bei einem Verfahren nach einem der Ansprüche 1 bis 11, wobei das Verfahren die folgenden Schritte umfaßt: es wird der schlauchförmige Träger (106) an einer ersten Extrusionsstelle extrudiert; es wird die Auskleidung (104) über den schlauchförmigen Träger (106) an einer zweiten Stelle stromab der ersten Stelle extrudiert, derart, daß der schlauchförmige Träger (106) anfänglich lose innerhalb der Auskleidung (104) zu liegen kommt; es wird, z.B. durch Überziehen, ein abschälbarer Kleber (110) auf der äußeren Oberfläche des schlauchförmigen Trägers (106) und/oder auf der inneren Oberfläche (104b) der Auskleidung (104) aufgebracht; und es wird dann die Auskleidung (104) mit dem schlauchförmigen Träger (106) zusammengepreßt, um einen allgemein abgeflachten Verbundaufbau zu schaffen, in dem die Auskleidung (104) ablösbar mit dem schlauchförmigen Träger (106) über einen Teil des Umfangs, aber nicht über den gesamten Umfang, verbunden ist.

14. Verfahren nach den Ansprüchen 12 oder 13, bei welchem:
(i) der abschälbare Kleber (110) ist als Überzug auf der äußeren Oberfläche des schlauchförmigen Trägers (106) aufgetragen und/oder der abschälbare Kleber (110) wird als Überzug auf der inneren Oberfläche (104b) der Auskleidung (104) aufgetragen; oder
(ii) der abschälbare Kleber (110) wird in Form eines Klebebandes oder mehrerer Klebebänder, die sich beispielsweise allgemein axial längs der äußeren Oberfläche des schlauchförmigen Trägers (106) erstrecken, aufgetragen und das Klebeband oder die Klebebänder sind fakultativ doppelseitig ausgebildet, wobei die beiden Seiten des Bandes unterschiedliche Abschälfestigkeiten besitzen, wobei die eine Seite eine relativ hohe Abschälfestigkeit besitzt, die mit der Auskleidung (104) in Verbindung steht und deren andere Seite eine relativ niedrige Abschälfestigkeit besitzt, die mit dem schlauchförmigen Träger (106) in Verbindung steht.

15. Verfahren zur Auskleidung eines Leitungsrohres oder eines Kanals (102) gemäß Anspruch 1, bei welchem ein Klebemittel-Spenderkopf durch das Leitungsrohr oder den Kanal vor der Auskleidung hergezogen wird und der Klebemittel-Spenderkopf derart angeordnet ist, daß ein Kleber auf der Vorderseite der umgestülpten Auskleidung und/oder auf der Leitungsrohrwandung aufgetragen wird, bevor die Auskleidung die Wand berührt.

16. Auskleidung (104), geeignet zur Benutzung in einem Verfahren nach einem der Ansprüche 1 bis 11, wobei die Auskleidung (104) eine abgeflachte oder axial gefaltete Konfiguration aufweist und **dadurch gekennzeichnet ist, daß** sie von einem schlauchförmigen Träger (106) getragen wird und diesen umschließt, wobei der schlauchförmige Träger (106) lösbar mit der Auskleidung (104) über einen abschälbaren Kleber (110) an einer Stelle oder an mehreren Stellen des Umfangs auf der inneren Oberfläche der Auskleidung (104), aber nicht auf der Auskleidung (104) auf beiden Seiten der Stelle verbunden ist, wobei die Auskleidung (104) im Gebrauch in der Lage ist, sich von dem schlauchförmigen Träger (106) abzulösen und sich in Berührung mit der Wand (112) des Leitungsrohres oder des Kanals (102) umzustülpen, wenn der schlauchförmige Träger (106) durch das Leitungsrohr oder durch den Kanal (102) gezogen wird.

## Revendications

1. Procédé de garnissage de la paroi interne d'un tuyau ou d'un conduit hôte (102) par éversion d'un manchon intérieur (104) à l'intérieur du tuyau ou du conduit hôte (102), dans lequel le manchon intérieur (104) possède une configuration aplatie ou pliée en direction axiale, **caractérisé en ce que** le manchon intérieur (104) est transporté sur un support tubulaire (106) qui l'entoure, le support tubulaire (106) étant collé de manière amovible au manchon intérieur (104) à l'aide d'un adhésif pelliculable (110) à un ou plusieurs endroits circonférentiels sur la surface interne du manchon intérieur (104) et n'étant pas collé au manchon intérieur (104) de part et d'autre de chacun desdits endroits, le manchon intérieur (104) étant arrangé pour être soumis à un pelliculage par rapport au support tubulaire (106) et pour être soumis à une éversion en direction de la paroi (112) du tuyau ou du conduit hôte (102) ou encore en contact avec ladite paroi lorsque le support tubulaire (106) est tiré à travers le tuyau ou le conduit hôte (102).

2. Procédé selon la revendication 1, dans lequel le support tubulaire (106) se déplace à travers le tuyau ou le conduit hôte (102) uniquement par traction et sans utiliser de pression de fluide depuis l'arrière du manchon intérieur d'éversion (104).

3. Procédé selon la revendication 1 ou 2, dans lequel le support tubulaire (106) est collé de manière amovible au manchon intérieur (104) au moins à deux endroits espacés l'un de l'autre en direction circonférentielle sur la surface interne du manchon intérieur (104b).

4. Procédé selon l'une quelconque des revendications 1 à 3, dans lequel le manchon intérieur (104) possède une section transversale circulaire aplatie.

5. Procédé selon l'une quelconque des revendications précédentes, dans lequel le support tubulaire (106) possède une section transversale circulaire aplatie.

6. Procédé selon l'une quelconque des revendications précédentes, dans lequel le support tubulaire (106) est tiré à travers le tuyau ou le conduit hôte (102) à l'aide d'un câble (108) fixé à l'extrémité avant du support (106).

7. Procédé selon l'une quelconque des revendications précédentes, dans lequel le manchon intérieur (104) possède une épaisseur de paroi dans la plage de 0,1 mm à 15 mm, par exemple dans la plage de 0,5 mm à 5 mm.

8. Procédé selon l'une quelconque des revendications précédentes, dans lequel le rapport du diamètre du manchon intérieur (104) au diamètre du support tubulaire (106), avant un quelconque aplatissement du manchon intérieur (104) et du support tubulaire (106), se situe dans la plage de 2 : 1 à 5 : 1, par exemple dans la plage de 3 : 1 à 4 : 1.

9. Procédé selon une quelconque des revendications précédentes, dans lequel l'adhésif pelliculable (110) prend la forme :
(i) d'une couche adhésive appliquée sur la surface externe du support tubulaire (106) et/ou sur la surface interne (104b) du manchon intérieur (104) avant de procéder à l'éversion ; ou
(ii) d'un ou de plusieurs rubans adhésifs s'étendant en général en direction axiale le long de la surface externe du support tubulaire (106), et le cas échéant dans lequel par exemple le ou les rubans adhésifs et ou sont des rubans double face, les deux faces du ruban étant recouvertes d'un adhésif possédant une résistance différente au décollement, une face recouverte d'un adhésif possédant une résistance relativement élevée au décollement étant collée au manchon intérieur (104) et l'autre face recouverte d'un adhésif possédant une résistance relativement faible au décollement étant collée au support tubulaire (106).

10. Procédé selon l'une quelconque des revendications précédentes, dans lequel le manchon intérieur (104) est réalisé en une matière polymère extrudée.

11. Procédé selon la revendication 10, dans lequel la matière polymère extrudée est une polyoléfine.

12. Procédé de formation d'un manchon intérieur (104) déposé sur un support, approprié pour être utilisé dans le procédé tel que défini dans l'une quelconque des revendications précédentes, le procédé comprenant le fait de munir la surface interne (104b) d'un manchon intérieur (104) d'un adhésif pelliculable (110), le fait de positionner le support tubulaire (106) à l'intérieur de l'alésage d'un manchon intérieur (104), et le fait de comprimer le manchon intérieur (104) et le support tubulaire (106) de telle sorte que le manchon intérieur (104) est pressé en contact avec le support tubulaire (106) et y est collé de manière pelliculable sur une partie, mais non sur la totalité, de sa circonférence.

13. Procédé de formation d'un manchon intérieur (104) déposé sur un support, approprié pour être utilisé dans le procédé tel que défini dans l'une quelconque des revendications 1 à 11, le procédé comprenant le fait d'extruder le support tubulaire (106) à un premier poste d'extrusion ; le fait d'extruder le manchon intérieur (104) autour du support tubulaire (106) à un deuxième poste d'extrusion en aval par rapport au premier, de telle sorte que le support tubulaire 106 est disposé dans un premier temps avec du jeu à l'intérieur du manchon intérieur (104) ; le fait d'appliquer, par exemple par enduction, un adhésif pelliculable (110) sur la surface externe du support tubulaire (106) et/ou sur la surface interne (104b) du manchon intérieur (104) ; et ensuite, le fait de comprimer le manchon intérieur (104) et le support tubulaire (106) pour former un assemblage composite généralement aplati dans lequel le manchon intérieur (104) est collé de manière pelliculable au support tubulaire (106) sur une partie, mais non sur la totalité, de sa circonférence.

14. Procédé selon la revendication 12 ou 13, dans lequel :
(i) l'adhésif pelliculable (110) est appliqué sous la forme d'une couche sur la surface externe du support tubulaire (106) et/ou l'adhésif pelliculable (110) est appliqué sous la forme d'une couche sur la surface interne (104) du manchon intérieur (104b) ; ou
(ii) l'adhésif pelliculable (110) est appliqué sous la forme d'un ou de plusieurs rubans adhésifs, par exemple s'étendant généralement en direction axiale le long de la surface externe du support tubulaire (106), et dans lequel, le cas échéant, par exemple le ou les rubans adhésifs est ou sont des rubans double face, les deux faces du ruban étant recouvertes d'un adhésif possédant une résistance différente au décollement, une face recouverte d'un adhésif possédant une résistance relativement élevée au décollement étant collée au manchon intérieur (104) et l'autre face recouverte d'un adhésif possédant une résistance relativement faible au décollement étant collée au support tubulaire (106).

15. Procédé de garnissage de la paroi interne d'un tuyau ou d'un conduit hôte (102) selon la revendication 1, dans lequel une tête de distribution d'adhésif est tirée le long du tuyau ou du conduit hôte devant le manchon intérieur, la tête de distribution d'adhésif étant arrangée pour appliquer un adhésif sur le côté frontal du manchon intérieur d'éversion et/ou sur la paroi du tuyau hôte, avant la mise en contact du manchon intérieur avec ladite paroi.

16. Manchon intérieur (104) approprié pour être utilisé dans un procédé tel que défini dans l'une quelconque des revendications 1 à 11, le manchon intérieur (104) étant **caractérisé en ce qu'**il est transporté sur un support tubulaire (106) qui l'entoure, le support tubulaire (106) étant collé de manière amovible au manchon intérieur (104) à l'aide d'un adhésif pelliculable (110) à un ou plusieurs endroits circonférentiels sur la surface interne du manchon intérieur (104) et n'étant pas collé au manchon intérieur (104) de part et d'autre de chacun desdits endroits, le manchon intérieur (104), en état de marche, étant à même d'être soumis à un pelliculage par rapport au support tubulaire (106) et d'être soumis à une éversion en direction de la paroi (112) du tuyau ou du conduit hôte (102) ou encore en contact avec ladite paroi lorsque le support tubulaire (106) est tiré à travers le tuyau ou le conduit hôte (102).
